# EUROPÄISCHE PATENTSCHRIFT

(11) **EP 3 317 616 B1**
(45) Veröffentlichungstag und Bekanntmachung des Hinweises auf die Patenterteilung: **18.09.2019**
(21) Anmeldenummer: 16721139.0
(22) Anmeldetag: 02.05.2016
(51) Int. Cl.: F16B 2/20, G01D 11/24, G01D 11/30

(54) **BEFESTIGUNGSEINHEIT FÜR EIN FUNK- UND/ODER SENSORMODUL**
FASTENING UNIT FOR A RADIO AND/OR SENSOR MODULE
UNITÉ DE FIXATION POUR UN MODULE RADIO ET/OU UN MODULE CAPTEUR

(30) Priorität: 30.06.2015 DE 102015212189
(43) Veröffentlichungstag der Anmeldung: 09.05.2018
(73) Patentinhaber: Robert Bosch GmbH, 70442 Stuttgart (DE)
(72) Erfinder: BOECK, Cornelius, 73230 Kirchheim (DE); MAYER, Michael, 75446 Wiernsheim/Pinache (DE); RIEDEL, Andreas, 70794 Filderstadt (DE); SCHADOW, Joachim, 70563 Stuttgart (DE); STOCK, Joern, 73249 Wernau (DE); TIEDE, Steffen, 71083 Herrenberg (DE); LUTZ, Manfred, 70794 Filderstadt (DE); MAUTE, Joerg, 71069 Sindelfingen (DE); ESENWEIN, Florian, 70771 Leinfelden-Echterdingen (DE); BARTH, Daniel, 70771 Leinfelden-Echterdingen (DE)
(86) Internationale Anmeldenummer: PCT/EP2016/059781
(87) Internationale Veröffentlichungsnummer: WO 2017/001087

(56) Entgegenhaltungen:
- WO-A1-2015/004132
- DE-A1- 19 758 075
- DE-A1-102011 004 914
- DE-U1- 29 506 386
- DE-U1- 29 506 386
- US-B2- 6 592 087

## Beschreibung

Die Erfindung betrifft eine Befestigungseinheit für ein Funk- und/oder Sensormodul.

### Stand der Technik

US 6,592,087 B2, DE 197 58 075 A1 und WO 2015/004132 A1 offenbaren ähnliche Befestigungseinheiten.

### Offenbarung der Erfindung

Die erfindungsgemäße Befestigungseinheit hat den Vorteil, ein Funk- und/oder Sensormodul mit einer externen Anwendungseinheit verbinden zu können. Die externe Anwendungseinheit ist hierbei vorteilhafterweise als Handwerkzeugmaschine ausgebildet. Dadurch, dass die Befestigungseinheit mit dem Funk- und/oder Sensormodul lösbar verbindbar ist, kann das Funk- und/oder Sensormodul einfach und kostengünstig an eine externe Anwendungseinheit wie eine Handwerkzeugmaschine insbesondere lösbar befestigt werden.

Die Erfindung wird durch den unabhängigen Anspruch 1 definiert.

Durch die in den Unteransprüchen angegebenen Merkmale sind vorteilhafte Weiterbildungen des Systems nach dem Anspruch 1 möglich.

Erfindungsgemäß weist die Befestigungseinheit mindestens ein erstes Gehäuseteil auf. Das erste Gehäuseteil weist mindestens einen Anschlussbereich mit mindestens einem Anschlusselement für die Aufnahme eines Funk- und/oder Sensormodul auf, sodass das Funk- und/oder Sensormodul konstruktiv einfach und kostengünstig mit der Befestigungseinheit verbunden werden kann.

Erfindungsgemäß ist das Anschlusselement dazu vorgesehen, das erste Gehäuseteil mit dem Funk- und/oder Sensormodul zu verbinden.

Erfindungsgemäß weist das erste Gehäuseteil mindestens einen ersten Aufnahmebereich auf, der dazu vorgesehen ist, eine Netzanschlussleitung aufzunehmen. Dadurch, dass die Netzanschlussleitung in einer externen Anwendungseinheit integriert ist, kann das erste Gehäuseteil der Befestigungseinheit mit der externen Anwendungseinheit verbunden werden. Das hat den Vorteil, dass das Funk- und/oder Sensormodul konstruktiv einfach und kostengünstig mit der externen Anwendungseinheit verbunden werden kann.

Erfindungsgemäß weist die Befestigungseinheit mindestens ein zweites Gehäuseteil auf. Das zweite Gehäuseteil der Befestigungseinheit weist mindestens einen zweiten Aufnahmebereich für die Aufnahme der Netzanschlussleitung auf. Somit kann die Netzanschlussleitung sicher mit dem Funk- und Sensormodul verbunden werden.

Erfindungsgemäß weist das erste Gehäuseteil mindestens ein erstes Verschlusselement und das zweite Gehäuseteil mindestens ein zweites Verschlusselement auf. Dadurch, dass das erste Gehäuseteil und das zweite Gehäuseteil mindestens über die Verschlusselemente miteinander verbindbar sind, kann die Netzanschlussleitung sicher im Befestigungsteil integriert werden.

In einer besonders vorteilhaften Ausführungsform sind das erste Gehäuseteil und das zweite Gehäuseteil über ein scharnierartiges Verbindungselement einstückig miteinander verbunden. Dadurch ist die Befestigungseinheit besonders sicher mit der externen Anwendungseinheit verbindbar, da das erste Gehäuseteil und das zweite Gehäuseteil unverlierbar miteinander verbunden sind.

In einer erfindungsgemäßen Ausführungsform ist das Anschlusselement durch einen Schraubdom zur Fixierung des Funk- und/oder Sensormoduls realisiert.

In einer weiteren erfindungsgemäßen Ausführungsform ist das Anschlusselement durch ein Rastelement zur Fixierung des Funk- und/oder Sensormoduls realisiert. Bevorzugt sind am ersten Gehäuseteil und am zweiten Gehäuseteil Mittel, insbesondere stegartigen Elemente angebracht. Vorteilhafterweise sind die stegartigen Elemente dazu vorgesehen, einen Reib- und/oder Formschluss zwischen der Netzanschlussleitung und den beiden Gehäuseteilen herzustellen. Somit kann konstruktiv einfach und sicher eine Netzanschlussleitung zwischen den beiden Gehäuseteilen der Befestigungseinheit angebracht werden.

Weitere Vorteile und zweckmäßige Ausführungen sind der Figurenbeschreibung und den Zeichnungen zu entnehmen.

### Zeichnungen

In den Zeichnungen sind Ausführungsformen einer erfindungsgemäßen Befestigungseinheit und eines erfindungsgemäßen Funk- und/oder Sensormoduls gezeigt.

Es zeigen:
- Figur 1: eine Anordnung einer erfindungsgemäßen Befestigungseinheit, eines Funk- und/oder Sensormoduls sowie einer externen Anwendungseinheit,
- Figur 2: eine erfindungsgemäße Befestigungseinheit für ein Funk- und/oder Sensormodul in schematischer Darstellung,
- Figur 3: eine zweite und dritte Ausführungsform der Befestigungseinheit für ein Funk- und/oder Sensormodul in schematischer Darstellung,
- Figur 4: eine vierte Ausführungsform der Befestigungseinheit für ein Funk- und/oder Sensormodul in schematischer Darstellung,
- Figur 5: drei Ausführungsform einer Klemmverbindung für eine Netzanschlussleitung,
- Figur 6: eine fünfte Ausführungsform der Befestigungseinheit für das Funk- und/oder Sensormodul in schematischer Darstellung,
- Figur 7: eine sechste Ausführungsform der Befestigungseinheit für ein Funk- und/oder Sensormodul in schematischer Darstellung,
- Figur 8: ein nicht zur Erfindung gehörendes Beispiel der Befestigungseinheit für ein Funk- und/oder Sensormodul in schematischer Darstellung,
- Figur 9: ein weiteres nicht zur Erfindung gehörendes Beispiel der Befestigungseinheit für ein Funk- und/oder Sensormodul in schematischer Darstellung.

### Beschreibung

Für die in den unterschiedlichen Ausführungsbeispielen vorkommenden gleichen Bauteile werden dieselben Bezugszahlen verwendet.

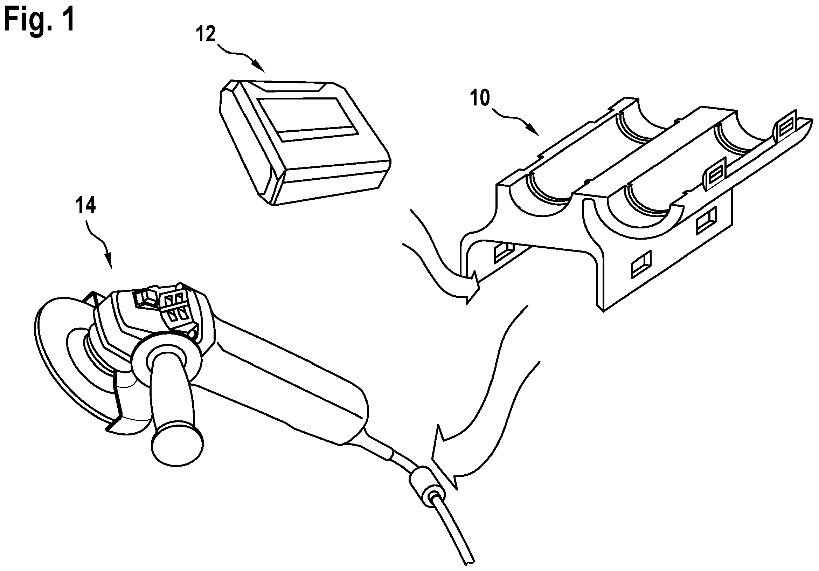

Figur 1 zeigt eine Befestigungseinheit 10, ein Funk- und/oder Sensormodul 12 und eine externe Anwendungseinheit 14. Die Befestigungseinheit 10 ist dazu vorgesehen, mit dem Funk- und/oder Sensormodul 12 lösbar verbunden zu werden. Das Funk- und/oder Sensormodul 12 kann insbesondere mit der externen Anwendungseinheit 14 verbunden werden. Die externe Anwendungseinheit 14 ist bevorzugt eine Handwerkzeugmaschine.

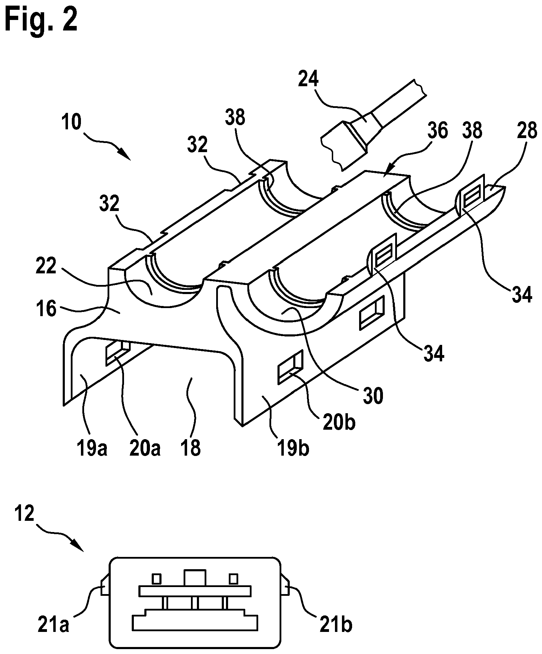

Wie in Figur 2 ersichtlich, weist die Befestigungseinheit 10 ein erstes Gehäuseteil 16 auf. Das erste Gehäuseteil 16 umfasst einen Anschlussbereich 18. Der Anschlussbereich 18 ist dazu vorgesehen, das Funk- und/oder Sensormodul 12 aufzunehmen. Der Anschlussbereich 18 wird von zwei sich gegenüberliegenden Gehäusewänden 19a und 19b teilweise begrenzt. Die erste Gehäusewand 19a umfasst ein erstes Anschlusselement 20a. Die zweite Gehäusewand 19b umfasst ein zweites Anschlusselement 20b. Dabei wird das Funk- und/oder Sensormodul 12 über die Anschlusselemente 20a, 20b mit dem ersten Gehäuseteil 14 fest, jedoch manuell oder durch ein geeignetes Werkzeug lösbar verbunden. Die Verbindung kann hierbei durch Rasten, Klemmen, Stecken, Einschieben, Verschrauben oder dergleichen realisiert sein. Im Ausführungsbeispiel in Figur 2 sind die Anschlusselemente 20a, 20b durch zwei Rastnuten realisiert. Es können aber auch mehr oder weniger als zwei Rastnuten am Befestigungsmodul 10 vorgesehen sein. Die Rastnuten korrespondieren mit mindestens zwei Rastnasen 21a und 21b, die am Funk- und/oder Sensormodul 12 angeordnet sind. Es können aber auch mehr oder weniger als zwei Rastnasen am Funk- und/oder Sensormodul 12 vorgesehen sein.

Auf einer dem Anschlussbereich 18 gegenüberliegenden Seite weist das erste Gehäuseteil (14) einen ersten Aufnahmebereich 22 auf. Der erste Aufnahmebereich 22 ist dazu vorgesehen, eine Netzanschlussleitung 24 aufzunehmen. Dabei wird die Netzanschlussleitung 24 im ersten Aufnahmebereich 22 angeordnet.

Die Netzanschlussleitung 24 ist Bestandteil der externen Anwendungseinheit 14. Die Netzanschlussleitung 24 dient als elektrische Energiequelle für die externe Anwendungseinheit 14.

Die Befestigungseinheit 10 weist weiterhin ein zweites Gehäuseteil 28 auf. Das zweite Gehäuseteil 28 umfasst mindestens einen zweiten Aufnahmebereich 30 für die Aufnahme der Netzanschlussleitung 24.

Am ersten Gehäuseteil 16 sind zwei erste Verschlusselemente 32 angeordnet. Am zweiten Gehäuseteil 28 sind zwei zweite Verschlusselemente 34 angeordnet. Über die Verschlusselemente 32, 34 sind das erste Gehäuseteil 16 und das zweite Gehäuseteil 28 miteinander verbindbar, verschließbar und lösbar. Die Verbindung kann hierbei durch Rasten, Klemmen, Stecken, Einschieben, Verschrauben oder dergleichen realisiert sein.

Darüber hinaus sind das erste Gehäuseteil 16 und das zweite Gehäuseteil 28 über ein scharnierartiges Verbindungselement 36 miteinander einstückig verbunden.

Die Fixierung der Netzanschlussleitung 24 erfolgt, indem die Netzanschlussleitung 24 im ersten Aufnahmebereich 22 des ersten Gehäuseteils 16 angeordnet ist und die beiden Gehäuseteile 16, 28 miteinander verbunden werden. Besonders vorteilhaft weisen das erste Gehäuseteil 16 und das zweite Gehäuseteil 28 stegartige Elemente 38 auf. Ist die Netzanschlussleitung 24 mit dem ersten Gehäuseteil 16 und dem zweiten Gehäuseteil 28 verbunden, klemmen die stegartigen Elemente 38 die Netzanschlussleitung 24 partiell ein und verursachen somit einen Reib- und Formschluss zwischen der Netzanschlussleitung 24 und den beiden Gehäuseteilen 16,28.

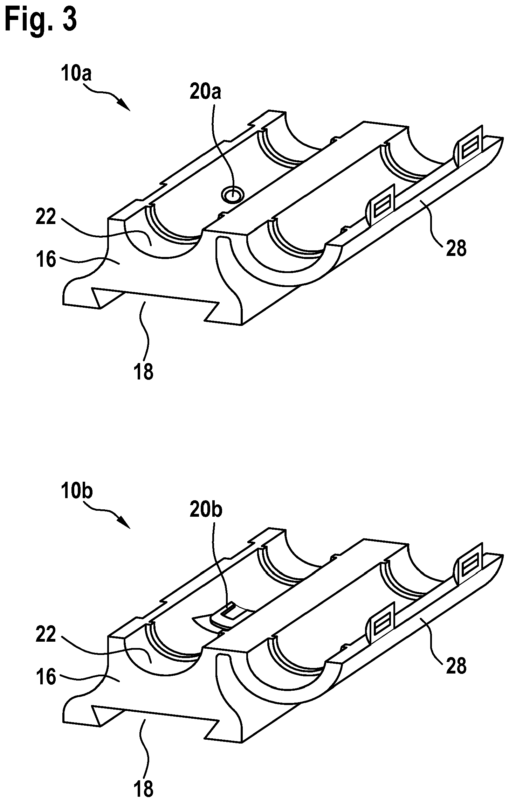

Figur 3 zeigt 2 Ausführungsformen einer Befestigungseinheit 10. In der ersten Ausführungsform 10a ist das Anschlusselement 20a im ersten Aufnahmebereich 22 des ersten Gehäuseteils 16 angeordnet. In der ersten Ausführungsform 10a ist das Anschlusselement 20a durch einen Schraubdom zur Fixierung des Funk- und/oder Sensormoduls 12 realisiert. In der zweiten Ausführungsform 10b ist das Anschlusselement 20b im ersten Aufnahmebereich 22 des ersten Gehäuseteils 16 angeordnet. In der zweiten Ausführungsform 10b ist das Anschlusselement 20b durch ein Rastelement 20b zur Fixierung des Funk- und/oder Sensormoduls 12 realisiert. Der Anschlussbereich 18 ist bei beiden Ausführungsformen als Schwalbenschwanzführung ausgeführt.

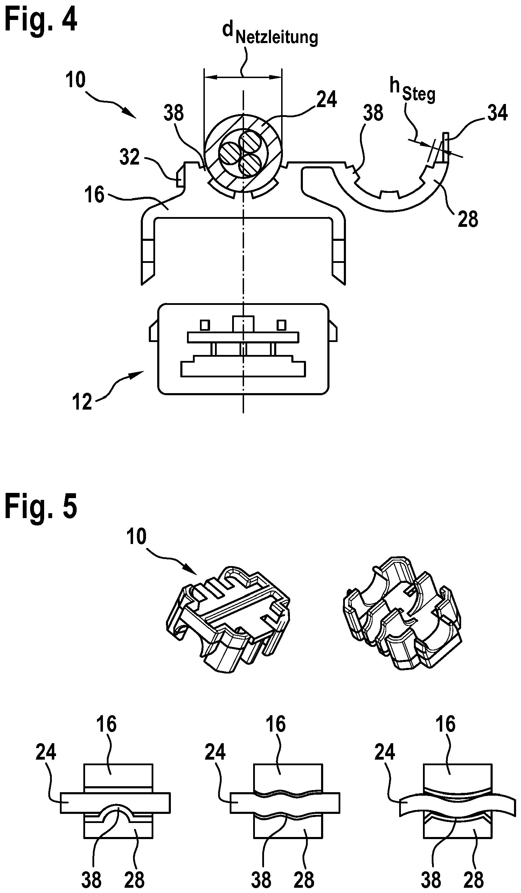

Figur 4 zeigt ein weiteres Ausführungsbeispiel einer Befestigungseinheit 10.

Die stegartigen Elemente 38 bestimmen mit ihren geometrischen Abmessungen die Abmessung eines Durchmessers d_{Netzleitung} der Netzanschlussleitung 24. Die Höhe h_{Steg} der stegartigen Elemente 38 definieren bei vorgegebener Abmessung des ersten Gehäuseteils 16 und des zweiten Gehäuseteils 28, wie viel mm der Durchmesser der Netzanschlussleitung 24 d_{Netzleitung} betragen darf. Da die Befestigungseinheit 10 ein kostengünstiges Bauteil ist, können somit für unterschiedliche Durchmesser d_{Netzleitung} der Netzanschlussleitung 24 kostengünstig verschiedene Befestigungseinheiten bereitgestellt werden. Dazu können aus einem Spritzgußwerkzeug mehrere Varianten der Befestigungseinheit mit unterschiedlichen geometrischen Abmessungen der stegartigen Elemente 38 hergestellt werden.

Figur 5 zeigt ein weiteres Ausführungsbeispiel eine Befestigungseinheit 10.

Die Fixierung der Netzanschlussleitung 24 wird vorzugsweise durch stegartige Elemente 38 gewährleistet, die es erlauben, dass die Netzanschlussleitung 24 um die Ecken geführt wird. Die Führung der Netzanschlussleitung 24 verläuft hierbei ähnlich wie in einem Labyrinth oder dergleichen.

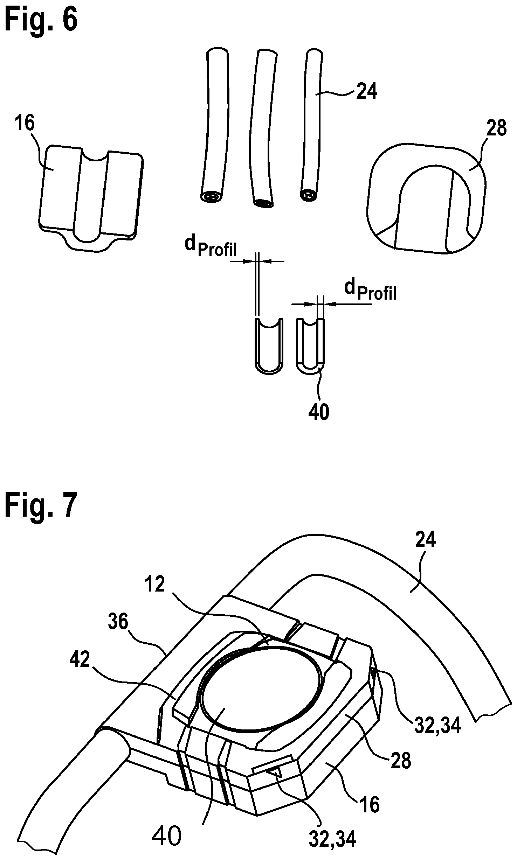

Figur 6 zeigt eine weitere erfindungsgemäße Ausführungsform des Befestigungsteils 10 für das Funk- und/oder Sensormodul 12.

In der Ausführungsform nach Figur 6 sind das erste Gehäuseteil 16 und das zweite Gehäuseteil 28 des Befestigungsteils 10 separate Bauteile. Um Netzanschlussleitungen 24 mit variablem Durchmesser d_{Netzleitung} fixieren zu können, werden Profilteile 40 in das erste Gehäuseteil 16 eingelegt.

Die Profilteile 40 weisen einen Wanddurchmesser d Profil auf. Der Wanddurchmesser definiert den Durchmesser d_{Netzleitung} der Netzanschlussleitung 24. Ein Möglichkeit den Durchmesser d_{Netzleitung} der Netzanschlussleitung 24 anzupassen, besteht darin, ein entsprechendes Profilteil 40 aus Kunststoff, Gummi oder dergleichen in das erste Gehäuseteil 16 anzuordnen.

In einem weiteren Schritt wird die Netzanschlussleitung 24 zugeordnet. Final wird das erste Gehäuseteil 16 mit dem zweiten Gehäuseteil 28 verbunden.

Figur 7 zeigt eine weitere erfindungsgemäße Ausführungsform der Befestigungseinheit 10 für ein Funk- und/oder Sensormodul 12. Das Funk- und/oder Sensormodul 12 weist einen Deckel 40 auf. Der Deckel 40 des Funk- und/oder Sensormoduls 12 kann geöffnet werden, um Elemente des Funk- und/oder Sensormoduls 12 wie beispielsweise eine Energieversorgung 50 des Funk- und/oder Sensormoduls 12 zu entnehmen und/oder auszutauschen. Das zweite Gehäuseteil 28 weist eine Öffnung 42 auf. Die Öffnung 42 ist für eine leichtere Zugänglichkeit zum Deckel 40 des Funk- und/oder Sensormoduls 12 und damit für den erleichterten Austausch der Energieversorgung des Funk- und/oder Sensormoduls 12 vorgesehen.

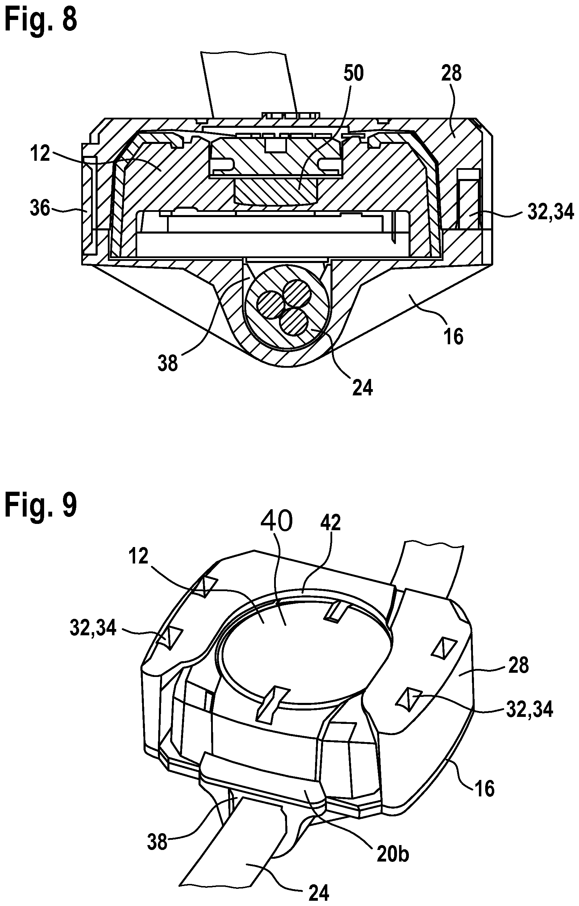

Figur 8 zeigt ein nicht zur Erfindung gehörendes Beispiel der Befestigungseinheit 10 für ein Funk- und/oder Sensormodul 12. In diesem erfindungsgemäßen Ausführungsbeispiel in Figur 7 ist das zweite Gehäuseteil 28 insbesondere geschlossen ausgeführt. Das Funk- und/oder Sensormodul 12 ist hierbei im zweiten Gehäuseteil 28 aufgenommen. Im zweiten Gehäuseteil 28 ist ebenfalls eine Energieversorgung 50 für das Funk- und/oder Sensormodul 12 angeordnet.

Figur 9 zeigt ein weiteres nicht zur Erfindung gehörendes Beispiel der Befestigungseinheit 10 für ein Funk- und/oder Sensormodul 12. Das Funk- und/oder Sensormodul 12 weist einen Deckel 40 auf. Der Deckel 40 des Funk- und/oder Sensormoduls 12 kann geöffnet werden, um Elemente des Funk- und/oder Sensormoduls 12 wie beispielsweise eine Energieversorgung des Funk- und/oder Sensormoduls 12 zu entnehmen und/oder auszutauschen. Das zweite Gehäuseteil 28 weist eine Öffnung 42 auf. Die Öffnung 42 ist für eine leichtere Zugänglichkeit zum Deckel 40 des Funk- und/oder Sensormoduls 12 und damit für den erleichterten Austausch der Energieversorgung 50 des Funk- und/oder Sensormoduls 12 vorgesehen.

## Patentansprüche

1. Befestigungseinheit (10) mit einem Funk- und/oder Sensormodul (12), das dazu vorgesehen ist, mit einer externen Anwendungseinheit (14) verbunden zu werden, wobei ein erstes Gehäuseteil (16) der Befestigungseinheit (10) einen Anschlussbereich (18) mit mindestens einem Anschlusselement (20) aufweist, wobei der Anschlussbereich (18) mittels des mindestens einen Anschlusselements (20) des Anschlussbereichs (18) mit dem Funk- und/oder Sensormodul (12) lösbar verbindbar ist, **dadurch gekennzeichnet, dass** das erste Gehäuseteil (16) mindestens einen ersten Aufnahmebereich (22) zur Aufnahme einer Netzanschlussleitung (24) aufweist und dass die Befestigungseinheit (10) mindestens ein zweites Gehäuseteil (28) mit mindestens einem zweiten Aufnahmebereich (30) für die Aufnahme der Netzanschlussleitung (24) aufweist, wobei die Netzanschlussleitung (24) in der externen Anwendungseinheit (14) integrierbar ist, und wobei das erste Gehäuseteil (16) der Befestigungseinheit (10) mindestens ein erstes Verschlusselement (32) aufweist und das zweite Gehäuseteil (28) der Befestigungseinheit (10) mindestens ein zweites Verschlusselement (34) aufweist, wobei das erste Gehäuseteil (16) und das zweite Gehäuseteil (28) mindestens über die Verschlusselemente (32, 34) miteinander verbindbar sind.

2. Befestigungseinheit (10) nach Anspruch 1, **dadurch gekennzeichnet, dass** das erste Gehäuseteil (16) und das zweite Gehäusetei! (28) über ein scharnierartiges Verbindungselement (36) insbesondere einstückig miteinander verbunden sind.

3. Befestigungseinheit (10) nach einem der vorhergehenden Ansprüche, **dadurch gekennzeichnet, dass** das mindestens eine Anschlusselement (20) durch einen Schraubdom zur Fixierung des Funk- und/oder Sensormoduls (12) realisiert ist.

4. Befestigungseinheit (10) nach einem der vorhergehenden Ansprüche, **dadurch gekennzeichnet, dass** das Funk- und/oder Sensormoduls (12) einen Deckel (41) aufweist, wobei der Deckel (41) geöffnet werden, um Elemente des Funk- und/oder Sensormoduls (12), insbesondere eine Energieversorgung (50) des Funk- und/oder Sensormoduls 12 zu entnehmen und/oder auszutauschen.

5. Befestigungseinheit (10) nach Anspruch 4, **dadurch gekennzeichnet, dass** das zweite Gehäuseteil (28) mindestens eine Öffnung (42) aufweist, die für eine leichte Zugänglichkeit zum Deckel (41) des Funk- und/oder Sensormoduls (12) vorgesehen ist.

6. Befestigungseinheit (10) nach einem der vorhergehenden Ansprüche, **dadurch gekennzeichnet, dass** das Anschlusselement (20) durch ein Rastelement zur Fixierung des Funk- und/oder Sensormoduls (12) realisiert ist.

7. Befestigungseinheit (10) nach einem der vorhergehenden Ansprüche, **dadurch gekennzeichnet, dass** Mittel, insbesondere stegartigen Elemente (38), vorgesehen sind, um einen Reib- und/oder Formschluss zwischen der Netzanschlussleitung (24) und den beiden Gehäuseteilen (16, 28) herzustellen.

8. Externe Anwendungseinheit (14), insbesondere Handwerkzeugmaschine, mit einer Befestigungseinheit (10) nach einem der Ansprüche 1 bis 7.

## Claims

1. Fastening unit (10) having a radio and/or sensor module (12), which is provided to be connected to an external application unit (14), a first housing part (16) of the fastening unit (10) having a connection region (18) with at least one connection element (20), the connection region (18) being detachably connectable to the radio and/or sensor module (12) by means of the at least one connection element (20) of the connection region (18),
**characterized in that** the first housing part (16) has at least one first receiving region (22) for receiving a power supply cable (24), and **in that** the fastening unit (10) has at least one second housing part (28) with at least one second receiving region (30) for receiving the power supply cable (24),
wherein the power supply cable (24) can be integrated in the external application unit (14), and
wherein the first housing part (16) of the fastening unit (10) has at least one first closure element (32) and the second housing part (28) of the fastening unit (10) has at least one second closure element (34),
wherein the first housing part (16) and the second housing part (28) can be connected to each other at least via the closure elements (32, 34).

2. Fastening unit (10) according to Claim 1, **characterized in that** the first housing part (16) and the second housing part (28) are connected to each other, in particular in one piece, via a hinge-like connecting element (36).

3. Fastening unit (10) according to one of the preceding claims, **characterized in that** the at least one connection element (20) is implemented by a screw boss for fixing the radio and/or sensor module (12).

4. Fastening unit (10) according to one of the preceding claims, **characterized in that** the radio and/or sensor module (12) has a cover (41), wherein the cover (41) can be opened in order to remove and/or replace elements of the radio and/or sensor module (12), in particular a power supply (50) of the radio and/or sensor module (12).

5. Fastening unit (10) according to Claim 4, **characterized in that** the second housing part (28) has at least one opening (42), which is provided for easy accessibility to the cover (41) of the radio and/or sensor module (12).

6. Fastening unit (10) according to one of the preceding claims, **characterized in that** the connection element (20) is implemented by a latching element for fixing the radio and/or sensor module (12).

7. Fastening unit (10) according to one of the preceding claims, **characterized in that** means, in particular web-like elements (38), are provided to produce a frictional and/or form-fitting connection between the power supply cable (24) and the two housing parts (16, 28).

8. External application unit (14), in particular hand-held machine tool, having a fastening unit (10) according to one of Claims 1 to 7.

## Revendications

1. Unité de fixation (10) comprenant un module radio et/ou capteur (12) destiné à être relié à une unité d'application externe (14), une première partie de boîtier (16) de l'unité de fixation (10) comportant une région de raccordement (18) pourvue d'au moins un élément de raccordement (20), la région de raccordement (18) pouvant être raccordée de manière amovible au module radio et/ou capteur (12) au moyen d'au moins un élément de raccordement (20) de la région de raccordement (18), **caractérisée en ce que** la première partie de boîtier (16) comporte au moins une première région de réception (22) destinée à recevoir une ligne de raccordement de réseau (24) et **en ce que** l'unité de fixation (10) comporte au moins une deuxième partie de boîtier (28) pourvue d'au moins une deuxième région de réception (30) destinée à recevoir la ligne de raccordement de réseau (24), la ligne de raccordement de réseau (24) pouvant être intégrée dans l'unité d'application externe (14), et la première partie de boîtier (16) de l'unité de fixation (10) comportant au moins un premier élément de fermeture (32) et la deuxième partie de boîtier (28) de l'unité de fixation (10) comportant au moins un deuxième élément de fermeture (34), la première partie de boîtier (16) et la deuxième partie de boîtier (28) pouvant être raccordées l'une à l'autre au moins par le biais des éléments de fermeture (32, 34).

2. Unité de fixation (10) selon la revendication 1, **caractérisée en ce que** la première partie de boîtier (16) et la deuxième partie de boîtier (28) sont reliées par le biais d'un élément de liaison en forme de charnière (36), en particulier d'une seule pièce.

3. Unité de fixation (10) selon l'une des revendications précédentes, **caractérisée en ce que** l'au moins un élément de raccordement (20) est réalisé par un bossage à vis destiné à la fixation du module radio et/ou capteur (12).

4. Unité de fixation (10) selon l'une des revendications précédentes, **caractérisée en ce que** le module radio et/ou capteur (12) comporte un capot (41), le capot (41) étant ouvert pour retirer et/ou remplacer des éléments du module radio et/ou capteur (12), en particulier une alimentation en énergie (50) du module radio et/ou capteur (12).

5. Unité de fixation (10) selon la revendication 4, **caractérisée en ce que** la deuxième partie de boîtier (28) comporte au moins une ouverture (42) prévue pour permettre un accès facile au capot (41) du module radio et/ou capteur (12).

6. Unité de fixation (10) selon l'une des revendications précédentes, **caractérisée en ce que** l'élément de raccordement (20) est réalisé par un élément de verrouillage destiné à la fixation du module radio et/ou capteur (12).

7. Unité de fixation (10) selon l'une des revendications précédentes, **caractérisée en ce que** des moyens, en particulier des éléments (38) en forme de nervures, sont prévus pour réaliser un liaison par friction et/ou par complémentarité de formes entre la ligne de raccordement de réseau (24) et les deux parties de boîtier (16, 28).

8. Unité d'application externe (14), en particulier machine-outil à main, comprenant une unité de fixation (10) selon l'une des revendications 1 à 7.
